# EUROPÄISCHE PATENTSCHRIFT

(11) **EP 0 985 855 B1**
(45) Veröffentlichungstag und Bekanntmachung des Hinweises auf die Patenterteilung: **07.12.2005**
(21) Anmeldenummer: 99117546.4
(22) Anmeldetag: 06.09.1999
(51) Int. Cl.: F16H 61/00

(54) **Stufenlos verstellbares Kegelscheibenumschlingungsgetriebe, insbesondere für Kraftfahrzeuge**
Continuously variable transmission of the belt and pulley type, especially for vehicles
Transmission à variation continue du type à poulies coniques et courroie, notamment pour véhicules automoteurs

(30) Priorität: 10.09.1998 DE 19841346
(43) Veröffentlichungstag der Anmeldung: 15.03.2000
(73) Patentinhaber: Volkswagen Aktiengesellschaft, 38436 Wolfsburg (DE)
(72) Erfinder: Adamis, Panagiotis, Prof., 38442 Wolfsburg (DE); Alt, Wilfried, 38162 Cremlingen (DE); Petersen, Rainer, Dipl.-Ing., 38444 Wolfsburg (DE); Hofmann, Lars, Dipl.-Ing., 04600 Altenburg (DE); Janz, Winfried, Dipl.-Ing., 38444 Wolfsburg (DE); Scholz, Romanus, Dipl.-Ing., 38448 Wolfsburg (DE)
(74) Vertreter: Hübsch, Dirk

(56) Entgegenhaltungen:
- DE-A- 3 000 581
- DE-A- 4 036 722
- DE-A- 4 331 266
- DE-A- 19 546 293
- DE-A- 19 633 274
- US-A- 5 168 975
- US-A- 5 184 981

## Beschreibung

Die Erfindung betrifft ein stufenlos verstellbares Kegelscheibenumschlingungsgetriebe, das insbesondere für den Einsatz in Kraftfahrzeugen vorgesehen ist, entsprechend dem Oberbegriff des Anspruchs 1 und wie aus der gattungsgemäßen DE-A-19546293 bekannt ist.

Stufenlos verstellbare Getriebe werden in unterschiedlicher Ausbildung und Anordnung in weiten Anwendungsgebieten der Technik eingesetzt. Bekannte Ausbildungsformen sind das Kegelscheibenumschlingungsgetriebe, das Kegelscheibenreibgetriebe und das Toroidreibgetriebe. Speziell die Ausbildung als Kegelscheibenumschlingungsgetriebe wird seit langem auch in Kraftfahrzeugen verwendet, beispielsweise in Form der bekannten DAF-Variomatic.

Aus der Auslegeschrift DE - AS 1 184 583 ist ein stufenlos verstellbares Kegelscheibengetriebe mit axial verschiebbaren Kegelscheiben bekannt, bei dem die für die Drehmomentübertragung erforderliche axiale Anpreßkraft zwischen den Kegelscheiben mittels einer Anpreßeinrichtung erzeugt wird, die mehrere Kurvenbahnen in Form von Schraubenflächen mit entgegengesetzt gerichteter veränderlicher Steigung und mit den Kurvenbahnen zusammenarbeitende Wälzkörper sowie eine auf der Getriebewelle befestigte Stützscheibe aufweist. Jeweils eine der Kegelscheiben ist axial verschiebbar und steht mit zwei koaxial angeordneten und relativ zueinander verdrehbaren zylindrischen Hülsen in Verbindung, von denen die eine linksgängig und die andere rechtsgängig ansteigende Schraubenflächen veränderlicher Steigung als stirnseitige Kurvenbahnen aufweist und die bei Axialverschiebungen der Kegelscheibe, die zur Änderung des Übersetzungsverhältnisses erforderlich sind, derart gegenläufig verdrehbar und gemeinsam axial verschiebbar sind, daß sie in dauernder Anlage an der Stützscheibe gehalten werden. Durch unterschiedliche konstruktive Ausbildung wird dafür gesorgt, daß die eine Hülse mittels einer axialen Verspannung zwischen der Hülse, den Wälzkörpern und der Stützscheibe sowohl das eingeleitete Drehmoment als auch eine Anpreßkraft auf die Kegelscheiben überträgt, während die andere Hülse entgegen der Drehrichtung des übertragenen Drehmomentes bis zur Anlage an die Wälzkörper gedreht wird, um bei einer Drehrichtungsumkehr ohne wesentliche Leerspielüberbrückung die Drehmoment- und Anpreßkraftübertragung übernehmen zu können. Dabei sorgen die Kurvenbahnen mit in Umfangsrichtung veränderlicher Steigung für eine drehmoment- und übersetzungsabhängige Anpreßkraft.

In der Auslegeschrift DE - AS 25 39 094 wird ebenfalls ein stufenlos einstellbares Kegelscheibengetriebe mit selbsttätig mechanisch wirkender Anpreßeinrichtung beschrieben. Der wesentliche Unterschied zu dem aus der DE - AS 1 184 583 bekannten Kegelscheibengetriebe besteht in der geometrischen Ausbildung und Anordnung der Bauteile zur Übertragung eines Drehmomentes und zur Erzeugung der drehmoment- und übersetzungsabhängigen Anpreßkraft.

Aus der DE 35 22 313 A1 ist ein stufenlos veränderliches Kegelscheibenumschlingungsgetriebe bekannt, das am antreibenden Scheibensatz eine Zugspannungseinstelleinrichtung zur mechanischen Druckkraftbelastung der konischen Scheiben ähnlich der oben beschriebenen Anpreßeinrichtungen aufweist, die jedoch aufgrund der Verwendung von Nockenflächen konstanter Steigung nur drehmomentabhängig wirksam ist. Am angetriebenen Scheibensatz ist ein hydraulischer Betätigungszylinder vorgesehen, der in Verbindung mit einer elektrohydraulischen Übersetzungsverhältnissteuereinrichtung zur Einstellung eines vorgegebenen Übersetzungsverhältnisses dient. Die Hydrauliksteuerung wird dabei permanent von einer Hydraulikpumpe gespeist, überschüssiges Hydrauliköl wird zurück in den Öltank geleitet.

Der vorliegenden Erfindung liegt das Problem zugrunde, den Getriebewirkungsgrad zu verbessern.

Das Problem wird durch die Merkmale des Anspruches 1 gelöst.

Vorteilhafte Ausgestaltungen ergeben sich aus den Unteransprüchen.

Das stufenlos verstellbare Kegelscheibenumschlingungsgetriebe, das insbesondere für Kraftfahrzeuge vorgesehen ist, besteht aus zwei Getriebeteilen, nämlich einem Antriebsteil und einem Abtriebsteil. Jeder Getriebeteil weist jeweils eine Welle auf, auf der zwei Kegelscheiben, nämlich eine Festscheibe und eine Losscheibe, die gegeneinander drehfest und axial verschiebbar ausgebildet und angeordnet sind, um eine gemeinsame Drehachse drehbar gelagert sind. Die Getriebeteile stehen durch ein zwischen den Kegelscheiben geführtes Zugmittel in Verbindung. In den Getriebeteilen ist jeweils eine mechanische Vorrichtung zur Drehmomentübertragung zwischen der Welle und den Kegelscheiben angeordnet. Das Kegelscheibenumschlingungsgetriebe weist mindestens an einem der Getriebeteile eine Vorrichtung zur Übersetzungssteuerung auf und ist mindestens an einem der Getriebeteile mit einer Vorrichtung zur Anpreßsteuerung versehen.

Die Vorrichtung zur Übersetzungssteuerung ist mit Hilfsenergie betreibbar und weist einen Energieerzeuger, einen Energiespeicher, mindestens ein Übersetzungsstellglied und ein Steuergerät auf, die derart ausgebildet und angeordnet sind, daß den Übersetzungsstellgliedern in Abhängigkeit von einem Übersetzungsstatus und einer Übersetzungsanforderung sowohl Energie aus dem Energiespeicher zuführbar als auch Energie entnehmbar ist, und daß der Energieerzeuger bedarfsweise zur Versorgung des Energiespeichers in Betrieb setzbar und abstellbar ist.

Durch die Verwendung selbsttätig funktionierender, vorzugsweise mechanisch ausgebildeter Vorrichtungen zur Drehmomentübertragung und zur Anpreßsteuerung entfallen Verluste, die bei Verwendung von hilfsenergiegetriebenen Vorrichtungen durch die Erzeugung, Verteilung und Steuerung von Hilfsenergie in Kauf genommen werden müßten. Die Vorrichtung zur Übersetzungssteuerung ist dagegen auf Hilfsenergie angewiesen. Dies ist insofern zweckmäßig, als das optimale Übersetzungsverhältnis im wesentlichen von Parametern abhängt, die außerhalb des Getriebes bestimmt werden, so daß eine Steuerung von außen unerläßlich ist. Die Übersetzungsstellglieder werden aus einem Energiespeicher versorgt, so daß der Energieerzeuger nur bedarfsweise, d.h. zum Wiederauffüllen des Energiespeichers, in Betrieb genommen werden muß. Unter einem Energiespeicher kann beispielsweise ein pneumatischer oder hydraulischer Druckkessel, ein elektrischer Akkumulator etc. verstanden werden. Durch den beschriebenen intermittierenden Betrieb benötigt der Energieerzeuger nur dann Antriebsleistung, wenn tatsächlich Energie erforderlich ist. Diese Anordnung verbessert den Wirkungsgrad des Getriebes, wodurch das gestellte Problem gelöst ist.

Die Vorrichtung zur Übersetzungssteuerung kann als elektrohydraulische Vorrichtung ausgebildet sein. Als Energieerzeuger kann eine Ölpumpe vorgesehen sein und als Energiespeicher kann ein hydraulischer Druckspeicher verwendet werden. Die Übersetzungsstellglieder können als hydraulische Stellglieder ausgebildet sein, und als Steuergerät kann ein Getriebesteuergerät vorgesehen sein, das derart ausgebildet und angeordnet ist, daß von Sensoren übertragene Eingangssignale verarbeitet und in Hydraulikleitungen angeordnete elektrohydraulische Steuerventile angesteuert werden, wobei die Hydraulikleitungen zwischen dem Druckspeicher und den Stellgliedern und zwischen den Stellzylindem und einem drucklosen Öltank angeordnet sein können.

Eine hydraulische Vorrichtung hat den Vorteil, bei kleinem Bauvolumen und relativ geringem Gewicht große Kräfte erzeugen zu können. Die elektrische Steuerung ergibt sich zweckmäßig aus der Verwendung eines Rechners als Getriebesteuergerät. Der Rechner verarbeitet von Sensoren gelieferte Informationen und steuert über die Betätigung der elektrohydraulischen Steuerventile Kräfte und Bewegungen, die von den hydraulischen Stellgliedern erzeugt werden. Die hydraulischen Stellglieder, die im wesentlichen jeweils aus einem Stellylinder und einem Verstellkolben bestehen, können einfach wirkend oder doppelt wirkend ausgebildet sein. Bei einfach wirkender Ausbildung wird nur eine axiale Stellkraft zu einem Zusammenschieben der jeweiligen Kegelscheiben erzeugt, eine Rückstellkraft wird dann durch eine Wechselwirkung zwischen den Kegelscheiben und dem Zugmittel hervorgerufen. Die Stellglieder können gehäusefest angeordnet sein oder sich teilweise mit der rotierenden Losscheibe mitdrehen. Bei gehäusefester Anordnung ist ein Axiallager zwischen dem jeweiligen Stellglied und der zugeordneten Losscheibe erforderlich, während bei teilweise mitdrehender Anordnung entsprechender Aufwand zur Abdichtung von rotierenden Bauteilen gegenüber ruhenden Bauteilen betrieben werden muß.

Die Vorrichtung zur Übersetzungssteuerung kann einen Elektromotor aufweisen, der derart ausgebildet und angeordnet ist, daß der Energieerzeuger von dem Elektromotor antreibbar ist, und daß der Elektromotor durch das Steuergerät bedarfsweise in Betrieb und außer Betrieb setzbar ist. Unter einem Energieerzeuger wird vorliegend beispielsweise eine Pumpe, ein Generator etc. verstanden, der mechanische Energie in Druck bzw. in elektrische Energie umwandelt. Die Verwendung eines Elektromotors als Hilfsantrieb hat den Vorteil, bei geringer Baugröße und geringem Gewicht über elektrische Leitungen einfach mit Energie versorgbar und steuerbar zu sein.

Die Vorrichtung zur Übersetzungssteuerung kann aber auch eine Kupplungsvorrichtung aufweisen, die derart ausgebildet und angeordnet ist, daß der Energieerzeuger mechanisch von einem Antriebsmotor des Kraftfahrzeuges antreibbar ist, und daß die Kupplungvorrichtung durch das Steuergerät bedarfsweise schließbar und trennbar ist. Eine solche Anordnung erfordert keinen zusätzlichen Hilfsantrieb, sondern nutzt bedarfsweise einen Teil der Antriebskraft eines ohnehin im Fahrzeug vorhandenen Antriebsmotors.

Vorzugsweise ist die Kupplungsvorrichtung mechanisch ausgebildet.

Die Vorrichtung zur Anpreßsteuerung kann als selbsttätige Vorrichtung ausgebildet sein und Komponenten aufweisen, wobei eine Übertragungkomponente zur Übertragung eines Drehmomentes von der Welle auf eine der Kegelscheiben, eine Umlenkungskomponente zur Umlenkung einer drehmomentabhängigen Umfangskraft in eine axiale Anpreßkraft, und eine Stützkomponente zur Abstützung der axialen Anpreßkraft vorgesehen sein kann. Eine solche selbsstätige Vorrichtung funktioniert zweckmäßigerweise mechanisch und nutzt das übertragene Drehmoment zum Aufbau einer für die zwischen den Kegelscheiben und dem Zugmittel erforderlichen Anpreßkraft.

Die Übertragungskomponente kann drehfest mit der Welle verbunden sein und ein oder mehrere Übertragungselemente aufweisen, die derart ausgebildet und angeordnet sind, daß ein an der Welle anliegendes Drehmoment an den Übertragungselementen in Form von Umfangskräften wirksam und übertragbar ist. Die Umlenkungskomponente kann mit der Losscheibe in Verbindung stehen und ein oder mehrere Wirkflächen aufweisen, die derart ausgebildet und gegenüber der Drehachse und den Umfangskräften geneigt angeordnet sind, daß Kontakt mit den Übertragungselementen herstellbar ist. Das Drehmoment kann durch Aufnahme der Umfangskräfte übertragbar sein und durch Umlenkung der Umfangskräfte die axiale Anpreßkraft erzeugt werden.

Durch eine solche Anordnung wird eine drehmomentabhängige Anpreßkraft erzeugt. Die Anpreßkraft zwischen den Kegelscheiben und dem Zugmittel sollte so bemessen sein, daß das eingeleitete Drehmoment durch schlupfarme Reibung übertragbar ist, jedoch nicht wesentlich größer sein, da sich sonst der Getriebewirkungsgrad durch unnötig hohe Reibungsverluste verschlechtern würde. Es ist daher vorteilhaft die Anpreßsteuerung so auszubilden, daß sich die erzeugte Anpreßkraft im wesentlichen proportional zum übertragenen Drehmoment verhält. Als Übertragungselemente kommen u. a. Kugeln, Rollen und Gleitsteine in Frage, wobei prinzipiell Elemente mit flächenhaftem Kontakt zu den Wirklächen vor solchen mit Linienkontakt oder Punktkontakt zur Vermeidung großer Flächenpressungen zu bevorzugen sind.

Im Gegensatz zur oben beschriebenen Anordnung kann die Übertragungskomponente auch drehfest mit der Losscheibe verbunden sein und ein oder mehrere Übertragungselemente aufweisen, die derart ausgebildet und angeordnet sind, daß ein an der Welle anliegendes Drehmoment an den Übertragungselementen in Form von Umfangskräften aufnehmbar und übertragbar ist. Die Umlenkungskomponente steht dann mit der Welle in Verbindung und weist ein oder mehrere Wirkflächen auf, die derart ausgebildet und gegenüber der Drehachse und den Umfangskräften geneigt angeordnet sind, daß Kontakt mit den Übertragungselementen herstellbar ist. Das Drehmoment wird durch die Aufnahme der Umfangskräfte übertragen und durch die Umlenkung der Umfangskräfte wird die axiale Anpreßkraft erzeugt.

Eine solche Anordnung ist der weiter oben beschriebenen Anordnung völlig gleichwertig. Nur die Anordnung der Übertragungskomponente und Umlenkungskomponente sind vertauscht worden, was aus konstruktiven Gründen vorteilhaft sein kann, jedoch die Funktionalität nicht beeinträchtigt.

Die Wirkflächen der Umlenkungskomponente können als Nockenkontur mit in Umfangsrichtung veränderter Neigung ausgebildet und derart angeordnet sein, daß die Übertragungselemente der Übertragungskomponente abhängig von einer übersetzungsabhängigen axialen Verschiebung der Umlenkungskomponente derart mit der Nockenkontur in Kontakt bringbar sind, daß durch die Umfangskräfte in Abhängigkeit der Neigung der Nockenkontur eine drehmomentabhängige und in Abhängigkeit der veränderten Neigung der Nockenkontur eine übersetzungsabhängige axiale Anpreßkraft erzeugbar ist.

Durch eine solche Ausbildung der Umlenkungskomponente wird zusätzlich zur Abhängigkeit der axialen Anpreßkraft vom übertragenen Drehmoment eine Abhängigkeit vom Übersetzungsverhältnis hergestellt. Wird das Übersetzungsverhältnis vergrößert, so verringert sich der wirksame Durchmesser im Antriebsteil des Kegelscheibenumschlingungsgetriebes. Bei gleich großem eingeleiteten Drehmoment erfordert dies eine größere zwischen den Kegelscheiben und dem Zugmittel zu übertragende Umfangskraft und somit eine größere axiale Anpreßkraft. Beim Abtriebsteil des Getriebes ist es umgekehrt, da sich dort der wirksame Durchmesser bei einer Vergößerung des Übersetzungsverhältnisses vergrößert.

Die Vorrichtung zur Anpreßsteuerung kann eine Vorrichtung zur Verminderung von Spitzenbelastungen beim Wechsel von Zugbetrieb auf Schubbetrieb und umgekehrt aufweisen. Bei mechanischen Vorrichtungen der beschriebenen Art kann es infolge der Überbrückung von Leerspiel der Übertragungselemente zwischen der Wirkfläche für Zugbetrieb und der Wirkfläche für Schubbetrieb zu starken Drehmomentstößen im gesamten Antriebsstrang kommen. Um eine entsprechend stabile Auslegung, die mit höheren Kosten und höherem Gewicht verbunden wäre, zu vermeiden und überdies den Antriebskomfort zu steigern, ist die Verwendung einer Vorrichtung zur Verminderung von Spitzenbelastungen sinnvoll.

Die Vorrichtung zur Anpreßsteuerung kann getrennte Umlenkungskomponenten für Zug- und Schubbetrieb aufweisen, und die Umlenkungskomponenten können derart ausgebildet und angeordnet sein, daß ständig Kontakt mit den Übertragungselementen der Übertragungskomponente besteht. Bei einer solchen Anordnung werden von Lastwechseln verursachte Belastungsspitzen vermieden bzw. deutlich abgeschwächt.

Die Umlenkungskomponenten der Vorrichtung zur Anpreßsteuerung können untereinander und / oder mit der Losscheibe über Federelemente und / oder über Dämpfungselemente in Verbindung stehen. Durch die Federelemente werden die Umlenkungskomponenten im unbelasteten Zustand in einer Ruheposition gehalten, in der sie sowohl Kontakt mit den zugeordneten Übertragungselementen des Übertragungsbauteils als auch mit der Losscheibe haben. Bei auftretenden Relativbewegungen zwischen diesen Komponenten, die durch eine Richtungsumkehr des übertragenen Drehmomentes oder durch eine Verstellung des Übersetzungsverhältnisses hervorgerufen werden können, erzeugen die Federelemente wegproportionale Rückstellkräfte und die Dämpfungselemente geschwindigkeitsproportionale Rückstellkräfte. Letztere dämpfen schnellere Bewegungen stärker ab als langsame. Die Federelemente sorgen für einen permanenten Kontakt der Umlenkungskomponenten mit den zugeordneten Übertragungselementen, während die Dämpfungselemente auftretende Lastspitzen durch eine begrenzte Relativbewegung zwischen den Umlenkungskomponenten und der Losscheibe abbauen. Dadurch ergibt sich bei Lastwechseln ein komfortables und materialschonendes Ansprechverhalten. Eine zur Übersetzungsverstellung erforderliche Verschieblichkeit der Übertragungselemente zur Nockenkontur bleibt erhalten.

Im Kegelscheibenumschlingungsgetriebe kann eine Vorrichtung zur Erzeugung einer drehmomentunabhängigen und übersetzungsunabhängigen Grundanpressung vorgesehen sein. Die Grundanpressung ist insofern vorteilhaft als dadurch bei einem Fahrzeugstillstand, d.h. bei kleinem Übersetzungsverhältnis und keinem übertragenen Drehmoment, bei einem Anfahrvorgang unnötiger Schlupf zwischen den Kegelscheiben und dem Zugmittel vermieden werden kann.

Die Grundanpressung ist in einfacher Weise durch eine die Kegelscheiben eines Getriebeteils zusammenpressende Schraubenfeder oder in anderer Weise realisierbar. Dabei ist eine einzige Grundanpressung im Antriebsteil des Getriebes ausreichend. Im Gegensatz zu einer Anordnung im Abtriebsteil hat die Anordnung im Antriebsteil den Vorteil, daß die Grundanpressung in diesem Fall automatisch dem momentanen Kraftbedarf entspricht. Bei zusammengeschobenen Kegelscheiben des Antriebsteiles wird aufgrund eines großen wirksamen Durchmessers zwischen den Kegelscheiben und dem Zugmittel eine relativ kleine axiale Anpreßkraft zur Übertragung eines vorgegebenen Drehmomentes benötigt und in der vorliegenden Ausführungsform durch eine weitgehend entspannte Feder bereitgestellt. Bei auseinandergedrückten Kegelscheiben des Antriebsteiles ist es umgekehrt. Aufgrund eines jetzt kleinen wirksamen Durchmessers zwischen den Kegelscheiben und dem Zugmittel ist nun eine große axiale Anpreßkraft zur Übertragung des vorgegebenen Drehmomentes erforderlich und wird durch die in diesem Fall stärker gespannte Feder zur Verfügung gestellt.

Im folgenden werden Aufbau und Funktionsweise des erfindungsgemäßen stufenlos verstellbaren Kegelscheibenumschlingungsgetriebes anhand eines in Figur 1 dargestellten Ausführungsbeispiels erläutert. Die Figur 2 und die Figur 3 zeigen jeweils schematisch Anordnungen von Vorrichtungen zur Vermeidung von Drehmomentspitzen beim Wechsel von Zug- auf Schubbetrieb, die für Kegelscheibenumschlingungsgetriebe vorgesehen sind.

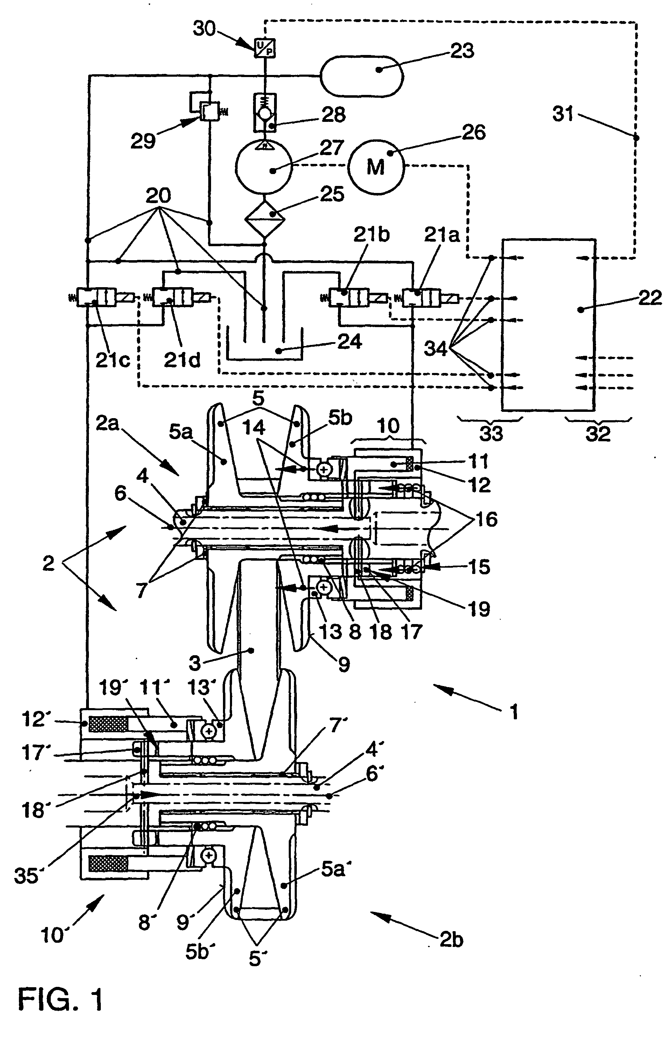

Figur 1 zeigt ein Kegelscheibenumschlingungsgetriebe 1 mit einer elektrohydraulischen Vorrichtung zur Übersetzungssteuerung und einer mechanischen Vorrichtung zur Anpreßsteuerung.

Das Kegelscheibenumschlingungsgetriebe 1 besteht aus einem Antriebsteil 2a und einem Abtriebsteil 2b, die über ein Zugmittel 3 in Verbindung stehen. Beide Getriebeteile 2 weisen im wesentlichen gleiche Bauteile auf, so daß für beide Getriebeteile 2 weitgehend identische Bezugszeichen verwendet werden, wobei die Bezugszeichen des Abtriebsteiles 2b gestrichen sind. Zur Verbesserung der Übersichtlichkeit werden gleiche Bauteile meist nur in einem der Getriebeteile 2 mit Bezugszeichen versehen. Beide Getriebeteile 2 weisen jeweils eine Welle 4, 4' und zwei Kegescheiben 5, 5', nämlich eine Festscheibe 5a, 5a' und eine Losscheibe 5b, 5b', mit einer gemeinsamen Drehachse 6, 6' auf. Die Festscheibe 5a, 5a' ist jeweils auf der zugeordneten Welle 4, 4' mittels Nadellagern 7, 7' drehbar gelagert und axial fixiert. Die Losscheibe 5b, 5b' ist mittels einer Kugelführung 8, 8' gegenüber der zugeordneten Festscheibe 5a, 5a' axial verschiebbar, aber drehfest gelagert. An der Außenseite 9, 9' der Losscheiben 5b, 5b' ist jeweils ein hydraulisches Stellglied 10, 10' in Form eines Verstellkolbens 11, 11' mit gehäusefestem Verstellzylinder 12, 12' angeordnet, durch das über Axiallager 13, 13' eine axiale Stellkraft 14 auf die zugeordnete Losscheibe 5b, 5b' ausübbar ist. Der Antriebsteil 2a weist eine Vorspannfeder 15 auf, die eine axiale Grundanpreßkraft 16 auf die dortige Losscheibe 5b ausübt. Beide Getriebeteile 2 weisen mit Rollen 17, 17' ausgestattete Rollenachsen 18, 18' auf, die mit der jeweiligen Welle 4, 4' fest verbunden sind.

Die Rollen 17, 17' stehen in Kontakt mit Wirkflächen 19, 19' der jeweiligen Losscheibe 5b, 5b'. Die hydraulischen Stellglieder 10, 10' sind über Hydraulikleitungen 20 mit jeweils zwei Steuerventilen 21a, 21b; 21c, 21d (21) verbunden. Die Steuerventile 21 sind als elektromagnetisch betätigte und getaktete Zweiwegeventile ausgebildet, die von einem Getriebesteuergerät 22 gesteuert werden. Im Ruhezustand sind die Steuerventile 21 geschlossen, im aktivierten Zustand geöffnet. Das erste Steuerventil 21a ist ein dem Antriebsteil 2a zugeordnetes Einlaßventil und verbindet im aktivierten Zustand einen hydraulischen Druckspeicher 23 mit dem hydraulischen Stellglied 10 des Antriebsteils 2a. Das dritte Steuerventil 21c ist ein entsprechendes Einlaßventil, das dem Abtriebsteil 2b zugeordnet ist. Das zweite Steuerventil 21b ist ein dem Antriebsteil 2a zugeordnetes Auslaßventil und verbindet im aktivierten Zustand das hydraulische Stellglied 10 des Antriebsteiles 2a mit einem drucklosen Öltank 24. Das vierte Steuerventil 21d ist ein entsprechendes Auslaßventil, das dem Abtriebsteil 2b zugeordnet ist. Aus dem Öltank 24 führt eine der Hydraulikleitungen 20 über ein Filterelement 25, eine von einem Elektromotor 26 antreibbare Ölpumpe 27 und ein Rückschlagventil 28 in den hydraulischen Druckspeicher 23. Parallelgeschaltet dazu befindet sich ein Druckbegrenzungsventil 29. Im Bereich des hydraulischen Druckspeichers 23 befindet sich ein Drucksensor 30, der über eine elektrische Steuerleitung 31 mit dem Getriebesteuergerät 22 verbunden ist. In das Getriebesteuergerät 22 werden Eingangssignale 32 geleitet, u.a. das Eingangssignal 32 des Drucksensors 30, und Ausgangssignale 33 über elektrische Arbeitsleitungen 34 zu den Steuerventilen 21 und zum Elektromotor 26 geleitet.

Die Vorrichtung zur Übersetzungssteuerung funktioniert elektrohydraulisch. Die Ölpumpe 27 fördert Hydrauliköl aus dem Öltank 24 durch eine der Hydraulikleitungen 20 über das Filterelement 25 in den hydraulischen Druckspeicher 23. Die Ölpumpe 27 wird bedarfsweise von dem Elektromotor 26 angetrieben, indem ein im Druckspeicher 23 wirksamer Druck permanent von dem angeschlossenen Drucksensor 30 aufgenommen und über die elektrische Steuerleitung 31 an das Getriebesteuergerät 22 weitergeleitet wird. Durch das Getriebesteuergerät 22 wird der Elektromotor 26 und damit die Ölpumpe 27 bei Unterschreiten eines festgelegten unteren Druckes im Druckspeicher 23 in Betrieb gesetzt und bei Erreichen eines festgelegten oberen Druckes abgestellt. Die Ölpumpe 27 wird also intermittierend betrieben. Das zwischen dem Druckspeicher 23 und der Ölpumpe 27 angeordnete Rückschlagventil 28 verhindert eine Entleerung des Druckspeichers 23 in den Öltank 24 bei ruhender Ölpumpe 27. Das parallelgeschaltete Druckbegrenzungsventil 29 verhindert durch eine druckabhängige Verbindung des Druckspeichers 23 mit dem Öltank 24 eine Überschreitung eines festgelegten Maximaldruckes im Druckspeicher 23.

Soll das Übersetzungsverhältnis zwischen dem Antriebsteil 2a und dem Abtriebsteil 2b des Kegelscheibenumschlingungsgetriebes 1 vergrößert werden, so wird durch das Getriebesteuergerät 22 der Druckspeicher 23 über das erste Steuerventil 21a auf das hydraulische Stellglied 10 des Antriebsteiles 2a geschaltet, während das hydraulische Stellglied 10' des Abtriebsteiles 2b über das vierte Steuerventil 21d auf den drucklosen Öltank 24 geschaltet wird. Demzufolge übt das hydraulische Stellglied 10 des Antriebsteiles 2a über das Axiallager 13 eine axiale Stellkraft 14 auf die Losscheibe 5b des Antriebsteiles 2a aus, so daß diese axial in Richtung auf die Festscheibe 5a bewegt wird und das Zugmittel 3 radial nach außen gedrückt wird. Dadurch, daß das hydraulische Stellglied 10' des Abtriebsteils 2b drucklos geschaltet ist, wird die dortige Losscheibe 5b' aufgrund einer im wesentlichen konstanten Länge des Zugmittels 3 von diesem weg von der Festscheibe 5a' nach außen gedrückt, so daß sich das Zugmittel 3 am Abtriebsteil 2b radial nach innen bewegt. Durch einen größeren wirksamen Durchmesser des Zugmittels 3 an den Kegelscheiben 5 des Antriebsteiles 2a und einen kleineren wirksamen Durchmesser an den Kegelscheiben 5' des Abtriebsteiles 2b ergibt sich ein größeres Übersetzungsverhältnis. Die Größe der Übersetzungsänderung hängt im wesentlichen von der Öffnungszeit der Steuerventile 21a, 21d ab, die nach dem Verstellvorgang wieder geschlossen werden. Eine Verkleinerung des Übersetzungsverhältnisses erfolgt sinngemäß in gleicher Weise dadurch, daß das hydraulische Stellglied 10' des Abtriebsteils 2b über das dritte Steuerventil 21c mit dem Druckspeicher 23 verbunden wird, während das hydraulische Stellglied 10 des Antriebsteils 2a über das zweite Steuerventil 21b drucklos auf den Öltank 24 geschaltet wird.

Die Vorrichtung zur Anpreßsteuerung funktioniert selbsttätig mechanisch, benötigt also keine Hilfsenergie, und ist im vorliegenden Beispiel an beiden Getriebeteilen 2 vorhanden. Ein jeweils an der Welle 4, 4' wirksames Drehmoment wird über die fest mit der Welle 4, 4' verbundenen Rollenachsen 18, 18' auf die drehbar ausgebildeten Rollen 17, 17' übertragen, an denen das Drehmoment in Form von Umfangskräften wirksam wird. Die Rollen 17, 17' stehen in Kontakt mit den Wirkflächen 19, 19' der jeweiligen Losscheibe 5b, 5b'. Die Wirkflächen 19, 19' weisen eine Neigung gegenüber der Drehachse 6, 6' und gegenüber den Umfangskräften auf. Dadurch werden die Umfangskräfte entsprechend der Neigung umgelenkt, was zu einer axialen Anpreßkraft 35, 35' führt, die proportional dem übertragenen Drehmoment ist und die jeweilige Losscheibe 5b, 5b' in Richtung der zugeordneten Festscheibe 5a, 5a' drückt. Durch eine Abhängigkeit der erzeugten axialen Anpreßkraft 35, 35' von dem übertragenen Drehmoment wird eine wirkungsgradverschlechternde Überanpressung vermieden. Durch eine nicht konstante Neigung der Wirkflächen 19, 19' wird zusätzlich erreicht, daß bei einer übersetzungsabhängigen Verschiebung der jeweiligen Losscheibe 5b, 5b' gegenüber der zugeordneten Festscheibe 5a, 5a' die Rollen 17, 17' an Orten anderer Neigung mit den Wirkflächen 19, 19' in Kontakt treten. Hierdurch wird zusätzlich eine Abhängigkeit der axialen Anpreßkraft 35, 35' von einem eingestellten Übersetzungsverhältnis hergestellt. Eine solche Abhängigkeit ist vorteilhaft, da bei kleinerem wirksamen Durchmesser zwischen den Kegelscheiben 5, 5' und dem Zugmittel 3 bei konstantem übertragenen Drehmoment die wirksame Umfangskraft und damit die erforderliche axiale Anpreßkraft 35, 35' größer ist.

Die am Antriebsteil 2a angeordnete Vorspannfeder 15 sorgt für eine axiale Grundanpressung 16, die übersetzungsunabhängig ist, und die insbesondere bei einem Fahrzeugstillstand ein schlupffreies und damit verschleißarmes Anfahren ermöglicht.

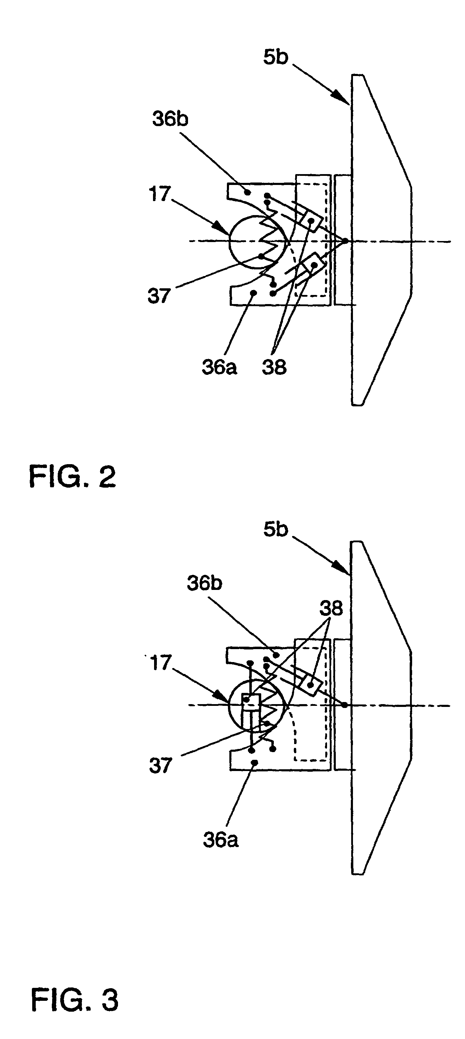

Figur 2 zeigt eine schematische Anordnung von Komponenten zur Übertragung eines Drehmomentes und zur Erzeugung einer axialen Anpreßkraft 35, 35' in einem Kegelscheibenumschlingungsgetriebe 1 nach Fig. 1. Es gibt zwei Umlenkungskomponenten 36, nämlich eine für Zugbetrieb 36a und eine für Schubbetrieb 36b. Beide Umlenkungskomponenten 36 stehen über ein Federelement 37 miteinander und über jeweils ein Dämpfungselement 38 mit einer der Losscheiben 5b, 5b' nach Fig. 1 in Verbindung. Durch das Federelement 37 werden beide Umlenkungskomponenten 36 mit ihren Wirkflächen 19, 19' an eine Rolle 17, 17' nach Fig. 1 angedrückt.

Durch einen ständigen Kontakt beider Umlenkungskomponenten 36 mit der kraftübertragenden Rolle 17, 17' wird in Verbindung mit einer gegenüber der Losscheibe 5b, 5b' gedämpften Verbindung ein stetiges und komfortables Ansprechverhalten bei Lastwechseln, insbesondere bei einem Wechsel von Zug- auf Schubbetrieb, erreicht. Belastungsspitzen im Antriebsstrang werden vermieden oder zumindest stark verringert. Durch unterschiedliche Gestaltung der Wirkflächen 19, 19' der Umlenkungskomponenten 36 und durch unterschiedliche Dämpfungscharakteristik der Dämpfungselemente 38 sind für Zug- und Schubbetrieb unterschiedliche Eigenschaften hinsichtlich des Ansprechverhaltens bei Lastwechseln und hinsichtlich der Erzeugung der drehmoment- und übersetzungsabhängigen axialen Anpreßkraft 35, 35' erreichbar. Das Federelement 37 wird in vorteilhafter Weise auch zur Erzeugung der axialen Grundanpressung 16 genutzt, so daß die Vorspannfeder 15 nach Fig. 1 entfallen kann.

In Figur 3 ist eine ähnliche Anordnung wie in Fig. 2 gezeigt. Ein Unterschied besteht in der Befestigung der Umlenkungskomponenten 36. Hier ist eine der Umlenkungskomponenten 36 über eines der Dämpfungselemente 38 mit der Losscheibe 5b, 5b' verbunden, während die andere Umlenkungskomponente 36 über das Federelement 37 und eines der Dämpfungselemente 38 untereinander in Verbindung stehen.

Hierdurch soll verdeutlicht werden, daß unterschiedlichste Kombinationen von Federelementen 37 und Dämpfungselementen 38 zur Verbindung der Umlenkungskomponenten 36 mit der Losscheibe 5b, 5b' einerseits und mit den Rollen 17, 17' andererseits realisierbar sind.

### BEZUGSZEICHENLISTE

- 1: Kegelscheibenumschlingungsgetriebe
- 2: Getriebeteil
- 2a: Antriebsteil
- 2b: Abtriebsteil
- 3: Zugmittel
- 4: Welle
- 4': Welle
- 5: Kegelscheibe
- 5': Kegelscheibe
- 5a: Festscheibe
- 5a': Festscheibe
- 5b: Losscheibe
- 5b': Losscheibe
- 6: Drehachse
- 6': Drehachse
- 7: Nadellager
- 7': Nadellager
- 8: Kugelführung
- 8': Kugelführung
- 9: Außenseite (der Losscheibe)
- 9': Außenseite (der Losscheibe)
- 10: hydraulisches Stellglied
- 10': hydraulisches Stellglied
- 11: Verstellkolben
- 11': Verstellkolben
- 12: Verstellzylinder
- 12': Verstellzylinder
- 13: Axiallager
- 13': Axiallager
- 14: axiale Stellkraft
- 15: Vorspannfeder
- 16: axiale Grundanpressung
- 17: Rolle
- 17': Rolle
- 18: Rollenachse
- 18': Rollenachse
- 19: Wirkfläche (der Losscheibe)
- 19': Wirkfläche (der Losscheibe)
- 20: Hydraulikleitung
- 21: Steuerventil
- 21a: erstes Steuerventil
- 21b: zweites Steuerventil
- 21c: drittes Steuerventil
- 21d: viertes Steuerventil
- 22: Getriebesteuergerät
- 23: hydraulischer Druckspeicher
- 24: Öltank
- 25: Filterelement
- 26: Elektromotor
- 27: Ölpumpe
- 28: Rückschlagventil
- 29: Druckbegrenzungsventil
- 30: Drucksensor
- 31: elektrische Steuerleitung
- 32: Eingangssignal
- 33: Ausgangssignal
- 34: elektrische Arbeitsleitung
- 35: axiale Anpreßkraft
- 35': axiale Anpreßkraft
- 36: Umlenkungskomponente
- 36a: Umlenkungskomponente für Zugbetrieb
- 36b: Umlenkungskomponente für Schubbetrieb
- 37: Federelement
- 38: Dämpfungselement

## Patentansprüche

1. Stufenlos verstellbares Kegelscheibenumschlingungsgetriebe (1), insbesondere für Kraftfahrzeuge, mit zwei jeweils eine Welle (4, 4') aufweisenden Getriebeteilen (2) - einem Antriebsteil (2a) und einem Abtriebsteil (2b) - wobei auf jeder der Wellen (4, 4') jeweils zwei gegeneinander drehfest und axialverschiebbar ausgebildete und angeordnete Kegelscheiben (5, 5') - eine Festscheibe (5a, 5a') und eine Losscheibe (5b, 5b') - um eine gemeinsame Drehachse (6, 6') drehbar gelagert sind, mit einem zwischen den Kegelscheiben (5, 5') geführten und die Getriebeteile (2) verbindenden Zugmittel (3), mit einer in jeder der Getriebeteile (2) angeordneten Vorrichtung zur Drehmomentübertragung zwischen der Welle (4, 4') und den Kegelscheiben (5, 5'), mit einer mindestens an einem der Getriebeteile (2) vorhandenen Vorrichtung zur Übersetzungsteuerung, und mit einer mindestens an einem der Getriebeteile (2) vorgesehenen Vorrichtung zur Anpresssteuerung, wobei die Vorrichtung zur Übersetzungssteuerung mit Hilfsenergie betreibbar ist und einen Energieerzeuger, einen Energiespeicher und mindestens ein Übersetzungsstellglied und ein Steuergerät (22) aufweist, die derart ausgebildet und angeordnet sind, dass dem Übersetzungsstellglied oder den Übersetzungsstellgliedern in Abhängigkeit von einem Übersetzungsstatus und einer Übersetzungsanforderung sowohl Energie aus dem Energiespeicher zuführbar als auch Energie entnehmbar ist, wobei die Vorrichtung zur Übersetzungssteuerung als elektrohydraulische Vorrichtung ausgebildet ist, nämlich als Energieerzeuger eine Ölpumpe (27) vorgesehen ist, **dadurch gekennzeichnet, dass** als Energiespeicher ein hydraulischer Druckspeicher (23) vorgesehen ist, dass die Vorrichtung zur Übersetzungssteuerung einen Elektromotor (26) aufweist, der derart ausgebildet und angeordnet ist, dass die Ölpumpe (27) von dem Elektromotor (26) antreibbar ist, und dass der Elektromotor (26) durch das Steuergerät (22) bedarfsweise zur Versorgung des Energiespeichers in Betrieb und außer Betrieb setzbar ist und dann die Ölpumpe (27) intermittierend antreibt.

2. Kegelscheibenumschlingungsgetriebe nach Anspruch 1, **dadurch gekennzeichnet, daß** die Übersetzungsstellglieder als hydraulische Stellglieder (10, 10') ausgebildet sind, und daß als Steuergerät ein Getriebesteuergerät (22) vorgesehen ist, das derart ausgebildet und angeordnet ist, daß von Sensoren übertragene Eingangssignale (32) verarbeitbar und in Hydraulikleitungen (20) angeordnete elektrohydraulische Steuerventile (21) ansteuerbar sind, wobei die Hydraulikleitungen (20) zwischen dem Druckspeicher (23) und den Stellgliedern (10, 10') und zwischen den Stellgliedern (10, 10') und einem drucklosen Öltank (24) angeordnet sind.

3. Kegelscheibenumschlingungsgetriebe nach einem der Ansprüche 1 oder 2, **dadurch gekennzeichnet, daß**
die Vorrichtung zur Anpreßsteuerung als selbsttätige Vorrichtung ausgebildet ist und Komponenten aufweist, wobei eine Übertragungkomponente zur Übertragung eines Drehmomentes von der Welle (4, 4') auf eine der Kegelscheiben (5, 5'), eine Umlenkungskomponente (36) zur Umlenkung einer drehmomentabhängigen Umfangskraft in eine axiale Anpreßkraft (35, 35'), und eine Stützkomponente zur Abstützung der axialen Anpreßkraft (35, 35') vorgesehen ist.

4. Kegelscheibenumschlingungsgetriebe nach Anspruch 3, **dadurch gekennzeichnet, daß** die Übertragungskomponente drehfest mit der Welle (4, 4') verbunden ist und ein oder mehrere Übertragungselemente aufweist, die derart ausgebildet und angeordnet sind, daß ein an der Welle (4, 4') anliegendes Drehmoment an den Übertragungselementen in Form von Umfangskräften wirksam und übertragbar ist, und daß die Umlenkungskomponente (36) mit der Losscheibe (5b, 5b') in Verbindung steht und ein oder mehrere Wirkflächen (19, 19') aufweist, die derart ausgebildet und gegenüber der Drehachse (6, 6') und den Umfangskräften geneigt angeordnet sind, daß Kontakt mit den Übertragungselementen herstellbar ist, daß das Drehmoment durch Aufnahme der Umfangskräfte übertragbar ist, und daß durch Umlenkung der Umfangskräfte die axiale Anpreßkraft (35) erzeugbar ist.

5. Kegelscheibenumschlingungsgetriebe nach Anspruch 3, **dadurch gekennzeichnet, daß** die Übertragungskomponente drehfest mit der Losscheibe (5b, 5b') verbunden ist und ein oder mehrere Übertragungselemente aufweist, die derart ausgebildet und angeordnet sind, daß ein Drehmoment von den Übertragungselementen in Form von Umfangskräften aufnehmbar und übertragbar ist, und daß die Umlenkungskomponente (36) mit der Welle (4, 4') in Verbindung steht und ein oder mehrere Wirkflächen (19, 19') aufweist, die derart ausgebildet und gegenüber der Drehachse (6, 6') und den Umfangskräften geneigt angeordnet sind, daß Kontakt mit den Übertragungselementen herstellbar ist, daß das Drehmoment durch Übertragung der Umfangskräfte übertragbar ist, und daß durch Umlenkung der Umfangskräfte die axiale Anpreßkraft (35) erzeugbar ist.

6. Kegelscheibenunischlingungsgetriebe nach einem der Ansprüche 4 oder 5, **dadurch gekennzeichnet, daß**
die Wirkflächen (19, 19') als Nockenkontur mit in Umfangsrichtung veränderter Neigung ausgebildet und derart angeordnet sind, daß die Übertragungselemente der Übertragungskomponente abhängig von einer übersetzungsabhängigen axialen Verschiebung der Umlenkungskomponente (36) derart mit der Nockenkontur in Kontakt bringbar sind, daß durch die Umfangskräfte in Abhängigkeit der Neigung der Nockenkontur eine drehmomentabhängige und in Abhängigkeit der veränderten Neigung der Nockenkontur eine übersetzungsabhängige axiale Anpreßkraft (35, 35') erzeugbar ist.

7. Kegelscheibenumschlingungsgetriebe nach einem der Ansprüche 1 bis 6, **dadurch gekennzeichnet, daß**
die Vorrichtung zur Anpreßsteuerung eine Vorrichtung zur Verminderung von Spitzenbelastungen beim Wechsel von Zugbetrieb auf Schubbetrieb und umgekehrt aufweist.

8. Kegelscheibenumschlingungsgetriebe nach einem der Ansprüche 4 bis 7, **dadurch gekennzeichnet, daß**
die Vorrichtung zur Anpreßsteuerung getrennte Umlenkungskomponenten (36) für Zugund Schubbetrieb (36a, 36b) aufweist, und daß die Umlenkungskomponenten (36) derart ausgebildet und angeordnet sind, daß ständig Kontakt mit den Übertragungselementen der Übertragungskomponente herstellbar ist.

9. Kegelscheibenumschlingungsgetriebe nach Anspruch 8, **dadurch gekennzeichnet, daß**
die Umlenkungskomponenten (36) der Vorrichtung zur Anpreßsteuerung untereinander und / oder mit der Losscheibe (5b, 5b') über Federelemente (37) und / oder über Dämpfungselemente (38) in Verbindung stehen.

10. Kegelscheibenumschlingungsgetriebe nach einem der Ansprüche 1 bis 9, **dadurch gekennzeichnet, daß**
eine Vorrichtung zur Erzeugung einer drehmomentunabhängigen und übersetzungsunabhängigen axialen Grundanpressung (16) vorgesehen ist.

## Claims

1. Continuously variable transmission of the belt and pulley type (1), in particular for motor vehicles, with two transmission parts (2) - a driving part (2a) and a driven part (2b) - in each case comprising a shaft (4, 4'), in each case two cone pulleys (5, 5') - a fixed pulley (5a, 5a') and an idler pulley (5b, 5b') - designed and arranged in a rotationally fixed and axially displaceable manner in relation to one another being mounted rotatably about a common axis of rotation (6, 6') on each of the shafts (4, 4'), with a traction means (3) guided between the cone pulleys (5, 5') and connecting the transmission parts (2), with a device, arranged in each of the transmission parts (2), for torque transmission between the shaft (4, 4') and the cone pulleys (5, 5'), with a device for transmission ratio control present at least on one of the transmission parts (2), and with a device for contact pressure control present at least on one of the transmission parts (2), the device for transmission ratio control being operable by means of auxiliary energy and comprising an energy generator, an energy store and at least one transmission ratio adjusting element and a control device (22), which are designed and arranged in such a way that it is possible both to supply energy from the energy store to and to draw energy from the transmission ratio adjusting element or the transmission ratio adjusting elements in dependence on a transmission ratio status and a transmission ratio requirement, the device for transmission ratio control being designed as an electrohydraulic device, that is an oil pump (27) is provided as energy generator, **characterized in that** a hydraulic accumulator (23) is provided as energy store, **in that** the device for transmission ratio control comprises an electric motor (26), which is designed and arranged in such a way that the oil pump (27) can be driven by the electric motor (26), and **in that** the electric motor (26) can be started and stopped as required by the control device (22) for supplying the energy store and then drives the oil pump (27) intermittently.

2. Transmission of the belt and pulley type according to Claim 1, **characterized in that** the transmission ratio adjusting elements are designed as hydraulic adjusting elements (10, 10'), and **in that** a transmission control device (22) is provided as control device, which is designed and arranged in such a way that input signals (32) transmitted from sensors can be processed and electrohydraulic control valves (21) arranged in hydraulic lines (20) can be activated, the hydraulic lines (20) being arranged between the accumulator (23) and the adjusting elements (10, 10') and between the adjusting elements (10, 10') and a pressureless oil tank (24).

3. Transmission of the belt and pulley type according to Claim 1 or 2, **characterized in that** the device for contact pressure control is designed as an automatic device and comprises components, a transmission component for transmitting a torque from the shaft (4, 4') to one of the cone pulleys (5, 5'), a diverting component (36) for diverting a torque-dependent peripheral force into an axial contact pressure force (35, 35'), and a supporting component for supporting the axial contact pressure force (35, 35') being provided.

4. Transmission of the belt and pulley type according to Claim 3, **characterized in that** the transmission component is connected in a rotationally fixed manner to the shaft (4, 4') and comprises one or more transmission elements, which are designed and arranged in such a way that a torque adjacent to the shaft (4, 4') is active and can be transmitted on the transmission elements in the form of peripheral forces, and **in that** the diverting component (36) is connected to the idler pulley (5b, 5b') and comprises one or more active surfaces (19, 19'), which are designed and arranged in an inclined manner in relation to the axis of rotation (6, 6') and the peripheral forces in such a way that contact can be made with the transmission elements, that the torque can be transmitted by taking up the peripheral forces, and that the axial contact pressure force (35) can be generated by diverting the peripheral forces.

5. Transmission of the belt and pulley type according to Claim 3, **characterized in that** the transmission component is connected in a rotationally fixed manner to the idler pulley (5b, 5b') and comprises one or more transmission elements, which are designed and arranged in such a way that a torque can be taken up and transmitted by the transmission elements in the form of peripheral forces, and **in that** the diverting component (36) is connected to the shaft (4, 4') and comprises one or more active surfaces (19, 19'), which are designed and arranged in an inclined manner in relation to the axis of rotation (6, 6') and the peripheral forces in such a way that contact can be made with the transmission elements, that the torque can be transmitted by transmission of the peripheral forces, and that the axial contact pressure force (35) can be generated by diverting the peripheral forces.

6. Transmission of the belt and pulley type according to Claim 4 or 5, **characterized in that** the active surfaces (19, 19') are designed as a cam contour with an inclination varied in the peripheral direction and are arranged in such a way that the transmission elements of the transmission component can, depending on a transmission-ratio-dependent axial displacement of the diverting component (36), be brought into contact with the cam contour in such a way that, by means of the peripheral forces, an axial contact pressure force (35, 35') which is torque-dependent can be generated in dependence on the inclination of the cam contour and which is transmission-ratio-dependent can be generated in dependence on the varied inclination of the cam contour.

7. Transmission of the belt and pulley type according to one of Claims 1 to 6, **characterized in that** the device for contact pressure control comprises a device for reducing peak loads when changing from traction condition to overrun condition and vice versa.

8. Transmission of the belt and pulley type according to one of Claims 4 to 7, **characterized in that** the device for contact pressure control comprises separate diverting components (36) for traction condition and overrun condition (36a, 36b), and **in that** the diverting components (36) are designed and arranged in such a way that contact can be made constantly with the transmission elements of the transmission component.

9. Transmission of the belt and pulley type according to Claim 8, **characterized in that** the diverting components (36) of the device for contact pressure control are connected to one another and/or to the idler pulley (5b, 5b') via spring elements (37) and/or via damping elements (38).

10. Transmission of the belt and pulley type according to one of Claims 1 to 9, **characterized in that** a device for generating a torque-independent and transmission-ratio-independent axial basic contact pressure (16) is provided.

## Revendications

1. Transmission à enroulement à poulie conique (1) à variation graduelle, notamment pour véhicules automobiles, comprenant deux parties de transmission (2) - une partie d'entraînement (2a) et une partie de sortie (2b) - présentant à chaque fois un arbre (4, 4'), deux poulies coniques (5, 5') - une poulie fixe (5a, 5a') et une poulie mobile (5b, 5b') - ne pouvant pas tourner l'une par rapport à l'autre et pouvant coulisser dans le sens axial, étant à chaque fois logées sur chacun des arbres (4, 4') de manière à pouvoir tourner autour d'un axe de rotation commun (6, 6'), comprenant un moyen de traction (3) guidé entre les poulies coniques (5, 5') et reliant les parties de transmission (2), comprenant un dispositif monté dans chacune des parties de transmission (2) pour transmettre le couple entre l'arbre (4, 4') et les poulies coniques (5, 5'), comprenant un dispositif présent sur au moins l'une des parties de transmission (2) pour commander la démultiplication, et comprenant un dispositif prévu sur au moins l'une des parties de transmission (2) pour commander la pression appliquée, le dispositif de commande de la démultiplication pouvant être actionné avec une énergie auxiliaire et présentant un générateur d'énergie, un accumulateur d'énergie et au moins un élément de réglage de la démultiplication et un appareil de commande (22) qui sont configurés et disposés de telle sorte que de l'énergie de l'accumulateur d'énergie peut à la fois être acheminée à l'élément de réglage de la démultiplication ou aux éléments de réglage de la démultiplication et en être prélevée en fonction d'un état de démultiplication et d'une demande de démultiplication, le dispositif de commande de la démultiplication étant réalisé sous la forme d'un dispositif électro-hydraulique, à savoir que le générateur d'énergie prévu est une pompe à huile (27), **caractérisée en ce que** l'accumulateur d'énergie prévu est un réservoir de pression hydraulique (23), que le dispositif de commande de la démultiplication présente un moteur électrique (26) qui est configuré et disposé de telle sorte que la pompe à huile (27) peut être entraînée par le moteur électrique (26), et que le moteur électrique (26) peut être mis en service et hors service par l'appareil de commande (22) en fonction du besoin pour alimenter l'accumulateur d'énergie et entraîne alors la pompe à huile (27) de manière intermittente.

2. Transmission à enroulement à poulie conique selon la revendication 1, **caractérisée en ce que** les éléments de réglage de la démultiplication sont réalisés sous la forme d'actionneurs hydrauliques (10, 10') et que l'appareil de commande prévu est un appareil de commande de transmission (22) qui est configuré et disposé de telle sorte que les signaux d'entrée (32) transmis par des capteurs peuvent être traités et les vannes de commande (21) électro-hydrauliques montées dans les conduites hydrauliques (20) peuvent être commandées, les conduites hydrauliques (20) étant disposées entre l'accumulateur de pression (23) et les actionneurs (10, 10') et entre les actionneurs (10, 10') et un réservoir à huile (24) non pressurisé.

3. Transmission à enroulement à poulie conique selon l'une des revendications 1 ou 2, **caractérisée en ce que** le dispositif de commande de la pression appliquée est réalisé sous la forme d'un dispositif autonome et présente des composants, un composant de transmission destiné à transmettre un couple de l'arbre (4, 4') à l'une des poulies coniques (5, 5'), un composant de renvoi (36) destiné à détourner une force périphérique dépendante du couple en une force de pressage axiale (35, 35'), et un composant support pour supporter la force de pressage axiale (35, 35') étant prévus.

4. Transmission à enroulement à poulie conique selon la revendication 3, **caractérisée en ce que** le composant de transmission est relié à l'arbre (4, 4') de manière à ne pas pouvoir tourner et présente un ou plusieurs éléments de transmission qui sont configurés et disposés de telle sorte qu'un couple appliqué à l'arbre (4, 4') agit et peut être transmis aux éléments de transmission sous la forme de forces périphériques, et que le composant de renvoi (36) est en liaison avec la poulie mobile (5b, 5b') et présente une ou plusieurs faces actives (19, 19') qui sont configurées et disposées inclinées par rapport à l'axe de rotation (6, 6') et aux forces périphériques de telle sorte qu'il est possible d'établir un contact avec les éléments de transmission, que le couple peut être transmis en absorbant les forces périphériques, et que la force de pressage axiale (35) peut être produite en déviant les forces périphériques.

5. Transmission à enroulement à poulie conique selon la revendication 3, **caractérisée en ce que** le composant de transmission est relié à la poulie mobile (5b, 5b') de manière à ne pas pouvoir tourner et présente un ou plusieurs éléments de transmission qui sont configurés et disposés de telle sorte qu'un couple peut être absorbé et transmis depuis les éléments de transmission sous la forme de forces périphériques, et que le composant de renvoi (36) est en liaison avec l'arbre (4, 4') et présente une ou plusieurs faces actives (19, 19') qui sont configurées et disposées inclinées par rapport à l'axe de rotation (6, 6') et aux forces périphériques de telle sorte qu'il est possible d'établir un contact avec les éléments de transmission, que le couple peut être transmis en transmettant les forces périphériques, et que la force de pressage axiale (35) peut être produite en déviant les forces périphériques.

6. Transmission à enroulement à poulie conique selon l'une des revendications 4 ou 5, **caractérisée en ce que** les faces actives (19, 19') sont réalisées sous la forme d'un contour de came ayant une inclinaison modifiée dans le sens du pourtour et sont disposées de telle sorte que les éléments de transmission du composant de transmission peuvent être amenés en contact avec le contour de came en fonction d'un décalage axial du composant de renvoi (36) en fonction de la démultiplication de telle sorte qu'il est possible de produire avec les forces périphériques, suivant l'inclinaison du contour de came, une force de pressage axiale (35, 35') dépendante de la démultiplication et dépendante du couple et en fonction de l'inclinaison du contour de came.

7. Transmission à enroulement à poulie conique selon l'une des revendications 1 à 6, **caractérisée en ce que** le dispositif de commande de la force de pressage présente un dispositif destiné à réduire les charges de crête lors du passage du mode traction au mode poussée et inversement.

8. Transmission à enroulement à poulie conique selon l'une des revendications 4 à 7, **caractérisée en ce que** le dispositif de commande de la force de pressage présente des composants de renvoi (36) séparés pour le mode traction et le mode poussée (36a, 36b) et que les composants de renvoi (36) sont configurés et disposés de telle sorte qu'il est possible d'établir un contact permanent avec les éléments de transmission du composant de transmission.

9. Transmission à enroulement à poulie conique selon la revendication 8, **caractérisée en ce que** les composants de renvoi (36) du dispositif de commande de la force de pressage sont en liaison entre eux et/ou avec la poulie mobile (5b, 5b') par le biais d'éléments ressorts (37) et/ou par le biais d'éléments d'amortissement (38).

10. Transmission à enroulement à poulie conique selon l'une des revendications 1 à 9, **caractérisée en ce qu'**il est prévu un dispositif pour générer une pression de base axiale (16) indépendante du couple et indépendante de la démultiplication.
